# EUROPEAN PATENT APPLICATION

(11) **EP 3 178 619 A1**
(43) Date of publication of application: **14.06.2017**
(21) Application number: 15829193.0
(22) Date of filing: 25.06.2015
(51) Int. Cl.: B25J 11/00, B66F 19/00

(54) **MOVEMENT ASSISTANCE DEVICE**

(30) Priority: 08.08.2014 JP 2014162984
(71) Applicant: Panasonic Corporation, Kadoma-shi, Osaka 571-8501 (JP)
(72) Inventor: WARIISHI, Takuo, Osaka-shi, Osaka 540-6207 (JP); FUJIMOTO, Hiromichi, Osaka-shi, Osaka 540-6207 (JP); KONISHI, Makoto, Osaka-shi, Osaka 540-6207 (JP)
(74) Representative: Vigand, Philippe
(86) International application number: PCT/JP2015/003208
(87) International publication number: WO 2016/021107

(57) **Abstract**

A movement assistance device (100) includes: a hanging portion (102) configured to be able to move a connecting end (106) at least horizontally; a power assisted suit (101) that assists a movement of an operator (OP), and includes a fitting portion (104) that is fitted onto an upper part of the torso of the operator (OP), a pair of arm units (105) that is provided along the arms (H) of the operator (OP) from around the shoulders of the operator (OP) and generates supplementary power for assisting a movement of the arms of the operator (OP) following the movement, and a movement control portion that moves the hanging portion (102) horizontally; and a suspension member (103) that connects the connecting end (106) of the hanging portion (102) and the fitting portion (104) of the power assisted suit (101) and hangs the power assisted suit (101).

## Description

### [Technical Field]

The present invention relates to a movement assistance device for assisting physical work which a wearer performs, and more particularly relates to a movement assistance device including a power assisted suit for heavy physical work that is used to assist the work of lifting, loading, unloading, and carrying heavy objects and is fitted onto the upper body of the wearer.

### [Background Art]

For example, a movement assistance device such as that disclosed in Patent Literature (PTL) 1 is known as a device that is fitted onto a wearer and thus can assist a movement of the wearer following the movement.

The movement assistance device assists the movement of a wearer and is used, for example, when arms, legs, or the like are under a heavy load, such as when a caregiver helps a bedridden individual in need of nursing care sit up and when packages are unloaded in a warehouse.

Aside from light physical work such as nursing care, heavy physical work such as the work of lifting and carrying heavy objects in a factory, a construction site, or the like is also assumed; various movement assistance devices having different device configurations depending on the purposes are known as disclosed in PTL 2, PTL 3, PTL 4, and the like.

In order to lift heavy objects by using the movement assistance devices with these configurations, expanded device configurations and powered-up motors, etc., are necessary, which makes the configurations increase in size and weight. Thus, it is difficult for wearers themselves to support such devices, meaning that a heavy configuration is needed as a portion for the lower body.

The movement assistance devices in aforementioned PTLs 2 to 4, which are designed for use for relatively heavy loads, each have a structure including: a power assisted suit for upper body that is fitted onto a wearer; and a base that supports the power assisted suit. In addition, wheels are provided on the base so that the base can move within a certain range by the wearer operating the base.

### [Citation List]

### [Patent Literature]

[PTL 1] Japanese Unexamined Patent Application Publication No. 2014-033778
[PTL 2] Japanese Unexamined Patent Application Publication No. H09-234684
[PTL 3] Japanese Unexamined Patent Application Publication No. 2006-051190
[PTL 4] Japanese Patent No. 4886392

### [Summary of Invention]

### [Technical Problem]

The movement assistance devices with such configurations, however, require a horizontal flat, smooth surface as a floor surface on which the base is placed, and has the problem of being unusable in a location in which a step is present or on an inclined surface, for example.

Furthermore, an increase in the size of the power assisted suit which is a portion for the upper body upsets the weight allocation balance between the power assisted suit and the base that supports the power assisted suit, causing the issue of falling of the power assist device, for example. Therefore, the weight balance needs to be considered for the base according to the weight of the power assisted suit depending on the usage. Since an increase in the size and weight of the base increases usage restrictions due to the issue of the floor surface on which the base is placed, there is the problem that the entire power assisted suit cannot be designed for use for unloading very large packages.

Therefore, a technical objective of the present invention is to provide a movement assistance device which solves the aforementioned problems, is widely usable on various floor surfaces, does not cause the issue of falling, and includes a power assisted suit that is fitted onto the upper body.

### [Solution to Problem]

In order to achieve the aforementioned technical objective, the present invention provides a movement assistance device having the following configuration.

A movement assistance device according to an aspect of the present invention includes: a hanging portion configured to be movable horizontally; a power assisted suit that assists a movement of a wearer by moving along the movement of the wearer, and includes a fitting portion that is fitted onto an upper part of a torso of the wearer, an arm unit that is provided on the fitting portion to extend along at least part of an arm of the wearer and configured to generate supplementary power for assisting a movement of the arm of the wearer in a direction following the movement of the arm, and a movement control portion that moves the hanging portion horizontally; and a suspension member that is suspended from the hanging portion, connects the hanging portion to the fitting portion of the power assisted suit, and hangs the power assisted suit from above under predetermined tension.

The hanging portion may include a crane that includes a boom configured to be rotatable with a variable tilt angle, the suspension member may be a wire configured to be feedable from the crane; with this, the movement assistance device can move in a wide range, meaning that it is possible to widen the working area of the movement assistance device.

Furthermore, the movement assistance device may include a tension control portion that controls tension of the suspension member that hangs the power assisted suit fitted onto the wearer, so as to cause the tension of the suspension member to be a predetermined value; with this, it is possible to reliably and securely hang the power assisted suit and thus increase the working efficiency of the movement assistance device.

The tension control portion may control the tension of the suspension member based on output from the load measurement portion, and may include a load measurement portion that is fitted onto a leg of the wearer and measures a load applied by the wearer; by doing so, it is possible to adjust the hanging tension according to changes in the tension caused, for example, when a package is lifted.

The tension control portion may determine the predetermined value of the tension based on a value of the supplementary power of the arm unit; by doing so, an increase in the load that occurs, for example, when a package is lifted, can be reflected in the hanging tension, making it possible to reliably and securely hang the power assisted suit.

Furthermore, the movement assistance device may include a lower-limb fitting unit including: a lower fitting portion that is fixedly fitted onto a trunk of the wearer; a leg link portion including a knee joint part configured to be bendable and stretchable; and a foot rest portion that is connected to the leg link portion via an ankle joint part and on which a foot of the user is fixedly placed, and the load measurement portion may be provided on a top surface of the foot rest portion of the lower-limb fitting unit; with this, the load on the lower limbs of the wearer can be backed up by the lower-limb fitting unit, and thus it is possible to improve the safety.

Furthermore, the hanging portion may include a pulley suspended above the wearer, and the suspension member may include a wire that is wound around the pulley and has a heavy bob at one end at which the wire is not connected to the power assisted suit; with this, it is possible to reduce the load on the wearer of the power assisted suit with a simple configuration.

### [Advantageous Effects of Invention]

With a configuration according to the present invention, the power assisted suit is supported by being hung from a hanging portion with a suspension member, instead of being supported from below by a base or the like, and thus even a power assisted suit for heavy loads that includes heavy motor and frame, etc., can be supported by a wearer fitted with the power assisted suit and is widely usable on various floor surfaces without the issue of falling.

### [Brief Description of Drawings]

[FIG. 1]

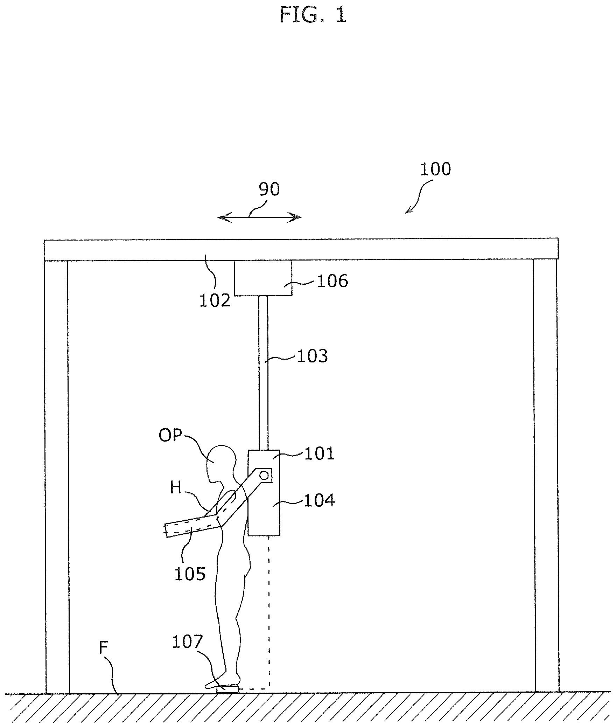

   FIG. 1 schematically illustrates an exemplary configuration of a movement assistance device according to an embodiment of the present invention.
[FIG. 2]

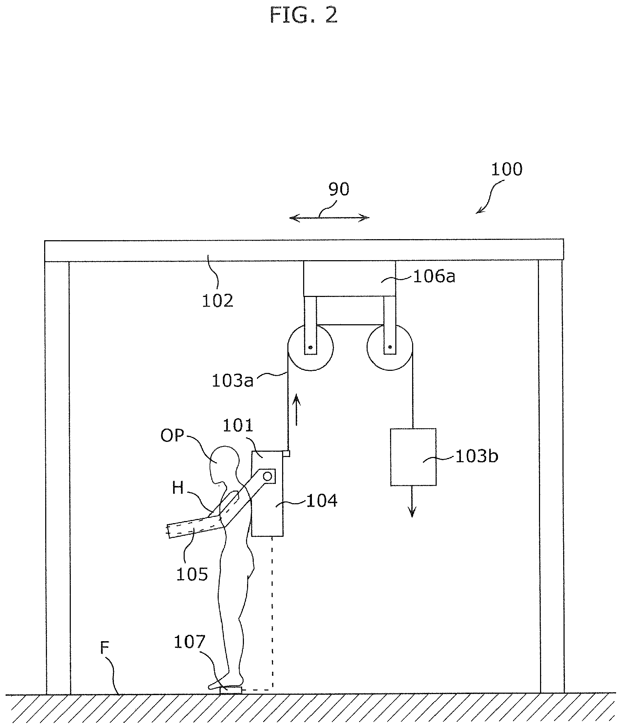

   FIG. 2 schematically illustrates another exemplary configuration of a movement assistance device according to an embodiment of the present invention.
[FIG. 3]

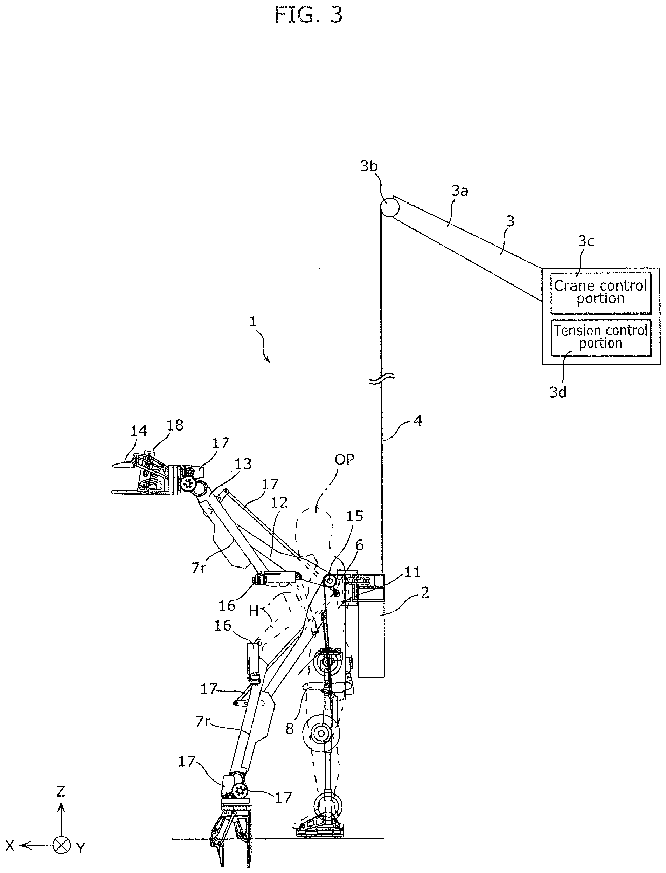

   FIG. 3 is a side view schematically illustrating a configuration of a movement assistance device according to an embodiment of the present invention.
[FIG. 4]

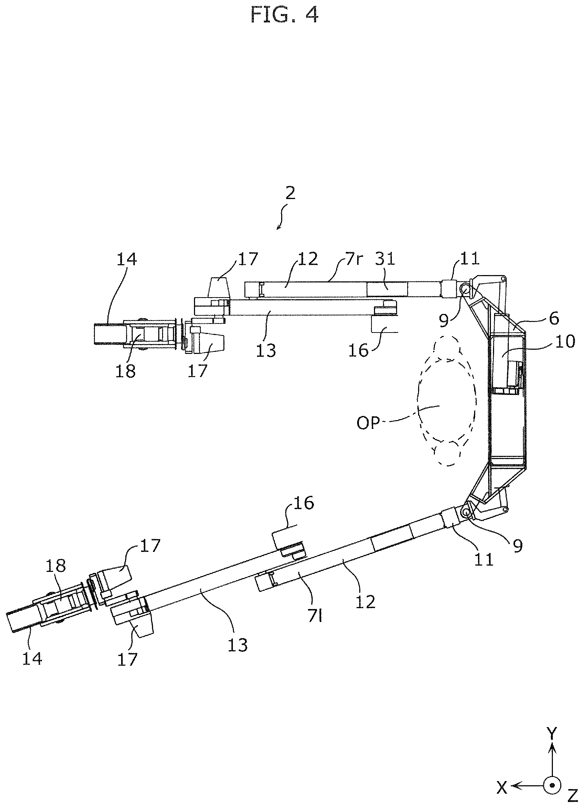

   FIG. 4 is a plan view illustrating a configuration of a power assisted suit used in the movement assistance device in FIG. 3.
[FIG. 5]

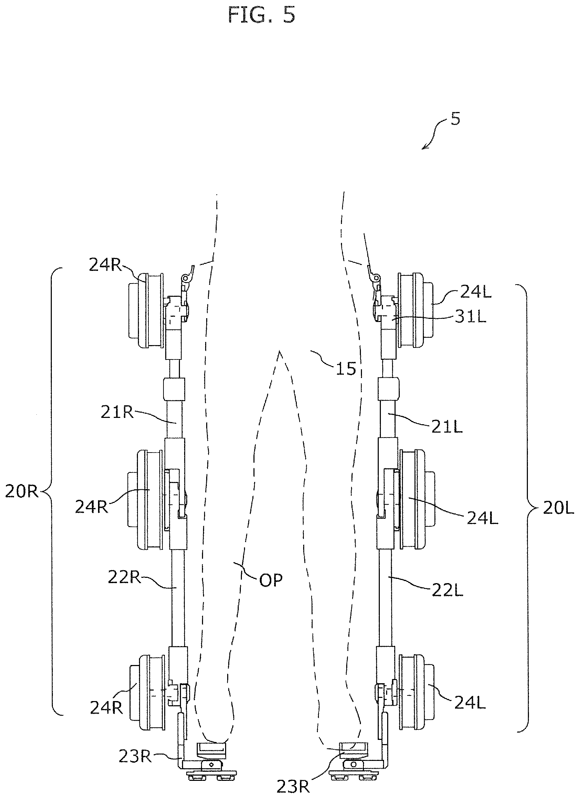

   FIG. 5 is a plan view illustrating a configuration of a lower-limb fitting unit used in the movement assistance device in FIG. 3.
[FIG. 6]

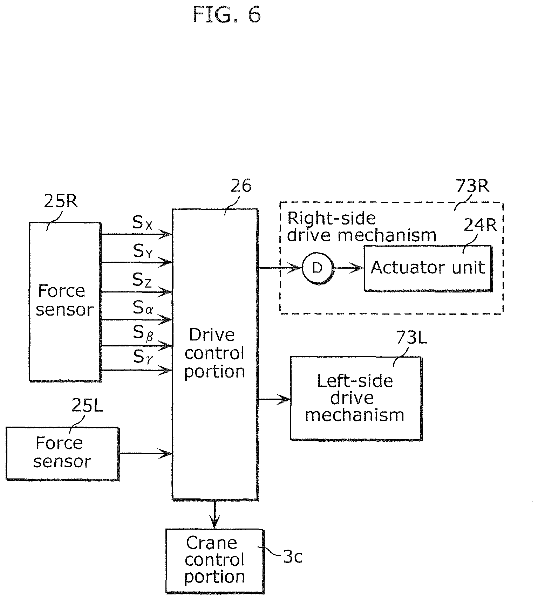

   FIG. 6 is a functional block diagram illustrating the driving control of a lower-limb fitting unit used in the movement assistance device in FIG. 3.
[FIG. 7]

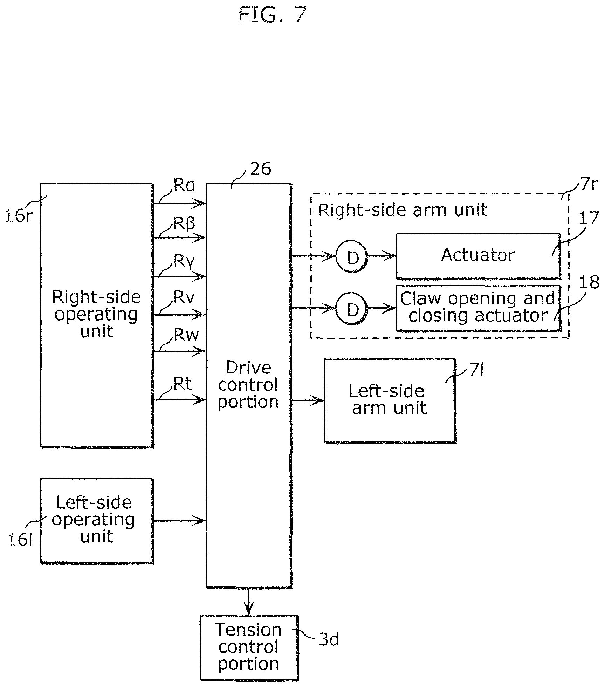

   FIG. 7 is a block diagram illustrating a control configuration of a power assisted suit used in the movement assistance device in FIG. 3.

### [Description of Embodiments]

Hereinafter, a movement assistance device according to an embodiment of the present invention will be described with reference to the drawings.

Note that the embodiment described below shows a general or specific example. The numerical values, shapes, materials, structural elements, the arrangement and connection of the structural elements, steps, the processing order of the steps etc. shown in the following embodiment are mere examples, and are not intended to limit the scope of the present invention. Furthermore, among the structural elements in the following embodiment, structural elements not recited in the independent claim indicating the broadest concept of the present invention are described as arbitrary structural elements.

### [Embodiment]

FIG. 1 schematically illustrates an exemplary configuration of a movement assistance device according to an embodiment of the present invention. A movement assistance device 100 according to an aspect of the present invention is basically implemented in the state in which a power assisted suit 101, which is fitted onto an upper part of the torso of an operator (a wearer) OP and provided along an arm H of the operator OP to assist a movement of the operator following a movement of the arm H, is held by being suspended from a hanging portion 102 with a suspension member 103.

The power assisted suit 101 includes a fitting portion 104 that is fitted onto the operator OP, and the operator OP holds the power assisted suit 101 by himself or herself, for example, in a standing position. The fitting portion 104 is for assisting movements of the arms of the operator OP and therefore, from the perspective of ergonomics, preferably is fitted onto the torso in the upper body in such a manner as to be carried on the back of the operator OP. Furthermore, the power assisted suit 101 includes a pair of arm units 105 that is provided along the arms of the operator from around the shoulders thereof and generates supplementary power for assisting movements of the arms of the operator OP in the direction following the movements. The arm unit has at least one joint, detects a movement of the operator OP, and power-assists the movement of the operator by operating to follow the movement of the operator OP. Thus, the operator OP can, for example, easily unload heavy objects which the operator OP cannot lift by himself or herself.

In order to assist the operator OP to hold the power assisted suit 101, the hanging portion 102 is held in the state of hanging the power assisted suit 101 with the use of the suspension member 103. In other words, when the power assisted suit 101 is increased in size to handle heavy objects, the operator OP cannot support the power assisted suit 101 by himself or herself, and therefore the hanging portion 102 hangs and holds the power assisted suit from above. The hanging portion 102 is provided in such a manner that a connecting end 106 connecting to the suspension member 103 can move at least horizontally as indicated by an arrow 90.

The configuration of the hanging portion 102 is not particularly limited; for example, it is possible to use a two-axis actuator or the like that is provided at a predetermined height higher than the operator OP with respect to a floor surface F and can move in XY-axis directions, as illustrated in FIG. 1. Other configuration examples include a configuration that includes a rotatable, cantilever boom with a variable tilt angle.

It is sufficient that the suspension member 103, which connects the hanging portion 102 and the power assisted suit 101 with each other, be configured to be able to hang and hold the power assisted suit 101 that has a predetermined weight, and not hinder the movement of the operator; various members such as a wire and a rod-shaped member can be used as the suspension member 103. In the present embodiment, the length of the suspension member 103 is fixed at a level that allows the lower limbs of the operator OP to be in contact with the floor surface F, but the suspension member 103 may be configured using a wire in such a manner that the length of the suspension member 103 can be changed by adjusting the feed of the wire, for example.

For example, when the operator OP is in a sitting position with his or her knees bent, the distance between hanging portion 102 and the power assisted suit 101 changes, and therefore, the suspension member 103 may be controlled so that the length thereof is adjusted according to the movement of the operator OP. In the control of the vertical length of the suspension member 103, the hanging and holding force can be controlled, for example, in accordance with the load on the lower limbs of the operator OP so that the vertical length does not exceed a predetermined threshold value.

Note that as the configurations of the hanging portion 102 and the suspension member 103, configurations such as those illustrated in FIG. 2 may be used, for example. FIG. 2 illustrates, as a variation of the hanging portion 102, an example in which pulleys 106a are used at the connecting end. The pulleys 106a at the connecting end are freely-rotatable pulleys provided above the operator OP and configured to be movable in the XY-axis directions. As an example of the suspension member 103, a wire 103a is provided for the pulleys and connected to the power assisted suit 101 at one end. In addition, a heavy bob 103b is connected to the other end of the wire 103a.

The heavy bob used has substantially the same weight as the power assisted suit 101, achieving a balance with the power assisted suit 101 to reduce the load of the power assisted suit 101 on the operator OP. With this, the burden that is imposed on the operator OP by wearing the power assisted suit 101 is reduced, and therefore, the operator can support the power assisted suit 101 using his or her own strength.

The connecting end 106 of the hanging portion 102 moves horizontally in accordance with a signal from the power assisted suit 101. In FIG. 1, as an example of a movement control portion, a sensor 107 provided on the feet of the operator OP detects the movement of the lower limbs of the operator OP, and a calculating unit (not illustrated in the drawings) provided in the fitting portion 104 calculates a direction and a distance of the movement of the operator OP from the detected information and transmits the result of the calculation to the hanging portion 102 to operate the hanging portion 102.

Note that examples of the movement control portion that operates the hanging portion 102 include, aside from the combination of the sensor provided on the lower limbs and the calculating means that calculates a direction and a distance of the movement of the operator OP, any other unit that can identify a site to which the operator OP desires to move and detect the position of the site. An exemplary unit detects a line of sight of the operator OP, recognizes a position which the operator visually recognizes on a particular condition as a destination of the movement, and moves the connecting end 106 of the hanging portion 102 to the position, for example.

Furthermore, the sensor 107 can be used to control the tension of the suspension member 103 hanging the power assisted suit 101. Specifically, the sensor 107 can detect a weight of the operator OP on the ground and control the length and the tension of the suspension member 103 so that the detection value of the sensor 107 falls within a predetermined threshold range.

As an example, in the case where the operator OP suspended from above with the suspension member 103 bends his or her legs, the detection value of the sensor 107 is small, and therefore, the tension of the suspension member 103 can be reduced or the length of the suspension member 103 can be increased so that the detection value of the sensor 107 falls within the predetermined range. In the case where a heavy object is lifted with the arm units 105, for example, the detection value of the sensor 107 increases because the operator supports the weight of the heavy object. In this case, the movement assistance device operates in such a manner that the tension of the suspension member 103 increases or the length of the suspension member 13 is reduced.

In the present movement assistance device, the power assisted suit does not need to be hung and held in the state where the lower limbs of the operator OP are in contact with the floor surface F; for example, the present movement assistance device may be used in the state where the operator OP is completely suspended in the air for work at height. For example, the present movement assistance device can be used in high-rise building construction or the like to power-assist the operator who is being suspended in the air from the present movement assistance device.

With a configuration of the movement assistance device according to an aspect of the present invention, the power assisted suit 101 is supported by being hung and held from the hanging portion with the suspension member, instead of being supported from below, and thus even a power assisted suit for heavy loads that includes heavy motor and frame can be supported by an operator fitted with the power assisted suit.

Furthermore, since the hanging portion 102 moves following the movement of the operator OP, the present movement assistance device is widely usable on various floor surfaces and, because the operator OP is suspended from above, does not cause the issue of falling.

Hereinafter, more specific configurations of the movement assistance device according to the embodiment of the present invention will be described.

FIG. 3 is a side view schematically illustrating a configuration of a movement assistance device 1 according to the embodiment of the present invention. As illustrated in FIG. 3, the movement assistance device 1 includes: a power assisted suit 2 configured to be fitted onto an operator (a wearer) OP, behind the operator himself or herself; a hanging portion 3 that supports the power assisted suit by hanging the power assisted suit; a suspension member 4 that connects an end of the hanging portion 3 and the power assisted suit 2 with each other; and a lower-limb fitting unit 5 that supports the lower body of the operator OP so that the operator OP can support the weight of the power assisted suit 2.

In the following description, the XYZ coordinate system illustrated in FIG. 3 is used in order to clarify the configuration of the movement assistance device 1 according to the present embodiment. As illustrated in FIG. 3, the X axis is a horizontal axis that extends forward and backward of the operator OP and the positive direction of which is forward of the operator OP; the Y axis is a horizontal axis that extends leftward and rightward of the operator OP and the positive direction of which is rightward of the operator OP; and Z axis is a vertical axis, the positive direction of which is upward.

The hanging portion 3 includes a telescopic, cantilever boom 3a that supports the suspension member 4 such as a wire in such a manner that the suspension member 4 can advance and retreat, and is configured so that the suspension member 4 is fed from a distal end 3b of the boom 3a. The hanging portion 3 can rotate around the Z axis, and the tilt angle of the boom 3a with respect to the horizontal axis can be changed.

The operator OP fitted with the power assisted suit 2 performs these operations of driving the hanging portion 3, and the hanging portion 3 hangs and holds the power assisted suit 2 under constant tension by rotating or telescopically moving following the horizontal movement of the operator OP and through automatic adjustment of the feed of the suspension member 4 (or the winding torque of the wire) according to displacement of the power assisted suit 2 in the Z-axis direction following the movement of the operator OP. A crane control portion 3c electrically connected to the boom 3a of the crane 3 operates in accordance with an operation signal from the power assisted suit 2 and drives the hanging portion 3.

Specifically, the horizontal movement of the power assisted suit 2 is automatically detected in response to a signal from the lower-limb fitting unit 5, as will be described later.

Furthermore, the hanging portion 3 includes a tension control portion 3d that measures tension of the wire serving as the suspension member 4 and controls the tension of the wire by adjusting the feed of the wire and the winding torque of the wire. According to the value of tension measured by the tension control portion 3d, the displacement of the distal end of the boom 3a in the Z-axis direction and the feed and the winding torque of the wire are adjusted, and the tension of the suspension member 4 is automatically managed to fall within a predetermined range so that the operator OP can support the power assisted suit 2.

Note that in the tension management, the tension is adjusted within a proper range, for example, according to a change in posture of the operator and the movement of the power assisted suit 2. In this control, as will be described later, the tension of the suspension member 4 may be managed through adjustment based on the value of supplementary power from a drive source of the power assisted suit 2, in addition to the value of tension measured by the tension control portion.

The power assisted suit 2 includes: a fitting portion 6 that is provided behind the operator OP and fixed to the operator; and a pair of right and left arm units 7r and 7l provided on the fitting portion 6 as one example of the arm unit. The operator OP is positioned between the right and left arm units 7r and 7l and operates the right and left arm units 7r and 7l with both the right and left arms H of the operator OP. Note that the right and left arm units 7r and 7l are denoted with the indexes r and l to distinguish the right arm unit and the left arm unit from each other, and the simple representation "arm unit 7" is used when there is no need to distinguish the right arm unit and the left arm unit from each other.

At the time of operating the movement assistance device 1, the operator OP may sit on a saddle 8 provided on the fitting portion 6 or may be in a standing position. Specifically, the posture of the operator OP may be determined according to his or her own height or the like so that the both shoulders of the operator OP are positioned approximately on a level with the fitting portion and the joint portions of the right and left arm units 7r and 7l.

As illustrated in FIG. 3, the fitting portion 6 is provided along the back of the operator OP, and when necessary, the saddle 8 is provided on the fitting portion 6. Protruding portions which protrude toward the operator OP are provided on both the right and left ends of the fitting portion 6, and shoulder rotary joints 9 for connecting the right and left arm units 7r and 7l are provided at distal ends of the protruding portions. The arm units 7r and 7l can rotate in the XY plane (that is, can swing horizontally) on the shoulder rotary joints 9 when a shoulder actuator 10 which is a linear motion actuator is driven.

Each of the right and left arm units 7r and 7l attached to the fitting portion 6 includes a shoulder portion 11, an upper arm portion 12, a front arm portion 13, and a hand portion 14. The upper arm portion 12 of the arm units 7r and 7l is connected to the shoulder portion 11 via an upper arm joint 15 which is a rotary joint in a rotatable manner (that is, in such a manner that the upper arm portion 12 can swing vertically). The front arm portion 13 is connected to the upper arm portion 12 in such a manner as to be able to freely move forward and backward in the longitudinal direction (the direction in which the front arm portion 13 extends) with respect to the upper arm portion 12. The hand portion 14 is provided at the distal end of the front arm portion 13.

An operating unit 16 is provided at the back end of the front arm portion 13 of each of the arm units 7r and 7l. The operator OP grasps the operating unit 16 with the hand H and adds strain thereto, and the operating unit 16 detects the added strain and operates the arm unit 7r or 7l.

Joints that connect the shoulder portion 11, the upper arm portion 12, the front arm portion 13, and the hand portion 14 included in the arm unit 7 are driven by an actuator 17 for driving the joints.

The hand portion 14, which is a member with openable claws, is capable of working on an object (such as the work of grasping and carrying an object). The hand portion 14 is configured to be able to tilt vertically with respect to the front arm portion 13 and rotate on a shaft (a pivot shaft C to be described later) provided in the direction from the base to the distal end of the hand portion 14. These operations are performed through operations of the actuator.

The claws provided on the hand portion 14 include a fixed claw and a movable claw that can open and close on the fixed claw. The movable claw is driven to open and close by a claw opening and closing actuator 18.

The operating unit 16 is a grip-shaped member which the operator grasps with his or her hand to operate and includes a force sensor (a sensor for power detection) that can measure force in three axis directions. The force sensor causes each actuator of the arm unit 7 to be driven to operate the arm unit according to movement of the operator.

FIG. 5 is a front view illustrating a configuration of the lower-limb fitting unit. In FIG. 5, the illustration of the power assisted suit 2 is omitted. The lower-limb fitting unit 5 includes a pair of left and right leg link portions 20L and 20R and foot rest portions 23L and 23R, as illustrated in the plan view of FIG. 5.

In the lower-limb fitting unit, the leg link portion 20L and 20R are connected via hip portions to a lower fitting portion fitted onto the trunk of the operator OP.

As illustrated in FIG. 5, the leg link portions 20L and 20R include thigh link portions 21L and 21R and calf link portions 22L and 22R, respectively, and are connected to each other via joint portions provided between these link portions. The leg link portions 20L and 20R are provided along the outer sides of the legs (limbs) of the operator OP. In the present embodiment, the leg link portions 20L and 20R are made from an aluminum-made material, which allows the leg link portions 20L and 20R to be light in weight and have sufficient strength to support the weight of the operator OP and the weight of the device itself. Note that other materials than the aluminum-made material such as a carbon material may be used.

Furthermore, actuator units 24L and 24R are provided on joints and operate to rotate the joints on the Y axis.

As illustrated in FIG. 5, the foot rest portions 23L and 23R are portions fitted onto the feet (extremities) of the operator OP. The foot rest portions 23L and 23R are fixed to dedicated shoes which the user wears and have built-in force sensors 25L and 25R detect a magnitude and a direction of a force applied by a movement of the lower limbs of the operator OP.

A sensor that is preferably used as the force sensors 25L and 25R is one that simultaneously measures, by itself, forces in three orthogonal X, Y, and Z axis directions, and torsion α, torsion β, and torsion γ in the three respective axis directions. Note that the three X, Y, and Z axes and the coordinate axes of torsion α, β, and γ along the three axis directions relative to the force sensor are absolute, and the directions of the axes as viewed from outside vary according to the orientation of the sensor.

The actuator units 24L and 24R include electric motors and the like, and change the relative attitude between the elements to be operated. On the basis of the output from the force sensors 25L and 25R, the actuator units 24L and 24R apply, to each joint portion, rotational torque according to the movement of the operator, thereby driving the lower-limb fitting unit 5.

As indicated in FIG. 6, the lower-limb fitting unit 5 includes a drive control portion 26 for driving each of the left and right leg link portions. The drive control portion 26 operates left and right drive mechanisms 73L and 73R each including three actuator units, which are described above, in response to output signals from the force sensors 25L and 25R provided in the left and right leg link portions 20L and 20R and information on the current attitudes of the left and right leg link portions 20L and 20R detected by the actuator units 24L and 24R. The movement of the movement assistance device 1 in the horizontal direction (in a direction in the XY plane) by the lower-limb fitting unit 5 is synchronized with the movement of the hanging portion 3.

Specifically, the force sensors 25L and 25R provided in the lower-limb fitting unit 5 detect and output forces in the positive and negative directions of the three axes, which are the X, Y, and Z axes, and the rotational torque around the α, β, and γ axes, as described above. As is also mentioned earlier, the actuator units 24L and 24R output current position information of the actuator units 24L and 24R, that is, information on current attitudes of the left and right leg link portions 20L and 20R, on the basis of the output from a built-in encoder or the like.

The drive control portion 26 performs operation control of the left leg link portion 20L and operation control of the right leg link portion 20R independently from each other. Specifically, the information output from the force sensor 25R on the right side is used as a signal for operating the leg link portion 20R on the right side which includes the actuator unit on the right side.

Six vector detection signals Sx, Sy, Sz, Sα, Sβ, and Sγ output from the force sensors 25L and 25R and the information output from the respective actuator units are input to the control portion 26. The control portion 26 predicts what movement the user will be making on the basis of the input signal, and functions as an actuator operating unit that identifies and drives each actuator included in the drive mechanisms.

Note that the prediction about the position of one of the left and right legs of the operator OP based on the output signal from the left and right force sensors 25L and 25R is preferably performed in accordance with the output signals from both of the left and right force sensors 25L and 25R. For example, in a continuous walking movement, the movement of the right leg is analyzed in time series, and the left leg is controlled to move likewise.

Note that the movement assistance device 1 moves in the horizontal direction (in a direction in the XY plane) by continuously making the movement of the lower-limb fitting unit 5 which is detected in a manner just described. Information on a direction and a distance of the movement of the movement assistance device 1 is sent to the crane control portion 3c and reflected as rotation and expansion operations of the boom 3a of the hanging portion 3 that hangs the movement assistance device 1.

Specifically, when the operator OP moves, vectors corresponding to the movement are applied to the left and right force sensors 25L and 25R of the lower-limb fitting unit 5, and the lower-limb fitting unit 5 walks through bending and stretching movements of the lower-limb fitting unit based on the vectors. Information on a direction and a distance of this walk is reflected as rotation and expansion operations of the boom 3a of the hanging portion 3.

Next, management control of the hanging tension of the movement assistance device 1 according to the present embodiment will be described. The hanging tension of the movement assistance device 1 is used to adjust a load that is applied to the operator OP fitted with the movement assistance device 1 through automatic adjustment of the feed of the suspension member 4. Specifically, the force of gravity on the operator fitted with the movement assistance device 1 is calculated on the basis of Z-axis-wise output from both of the left and right force sensors 25L and 25R of the lower-limb fitting unit 5, and the tension control portion 3d changes the feed of the suspension member 4 so that the calculated value falls within a predetermined range.

Therefore, for example, when an object that imposes a heavy load is lifted by the power assisted suit 2, a Z-axis-wise force that is applied to each of the left and right force sensors 25L and 25R increases, and therefore the winding torque of the suspension member 4 increases, but the weight of the load which the power assisted suit 2 supports is automatically adjusted based on the information of supplementary power which the actuators 17 of the left and right arm units 7r and 7l provide to the operator OP.

FIG. 7 is a block diagram illustrating a control configuration of the power assisted suit 2 of the movement assistance device 1 according to the present embodiment. In FIG. 7, control blocks for only the arm unit 7r on the right side are illustrated to represent the right and left arm units 7r and 7l. Note that the same or similar control configuration is provided for the arm unit 7l on the left side.

As illustrated in FIG. 7, operations of the power assisted suit 2 are controlled by the drive control portion 26 operating in accordance with a control program stored in advance. The drive control portion 26 is the same as the above-described drive control portion 26 for controlling operations of the lower-limb fitting unit 5. The arm units 7r and 7l are driven and controlled through input of a detection signal from the operating unit 16 to the drive control portion 26. The actuators 17 mounted on the arm units 7r and 7l are connected to the drive control portion 26 through drivers (denoted by D in the figure) and operate in accordance with an operation signal from the drive control portion 26.

The force sensor provided in the operating unit 16 detects and outputs forces in the positive and negative directions of three axes, which are the α, β, and γ axes, and twisting forces in both directions of a twist w around the α axis and a twist v around the γ axis. Furthermore, the operating unit 16 outputs a detection signal Rt from a sensor that detects an operation for opening and closing the hand portion 14.

Vector detection signals Rα, Rβ, Rγ, Rv, and Rw and the detection signal Rt output from the force sensor 25 are input to the drive control portion 26 so that each actuator 17 is driven in a direction corresponding to the direction of the force detected by the force sensor 25.

Each actuator 17, which can output the value of supplementary power corresponding to the movement, outputs the output value to the drive control portion 26. At the drive control portion 26, the output is counted in the calculation of supplementary power for the entire arm units 7r and 7l, and the result of this calculation is sent to the tension control portion 3d and thereby used in the tension control of the suspension member 4.

In the movement assistance device 1 according to the present embodiment, as just described, the arm units 7r and 7l extending forward from the lateral sides of the operator OP are telescopically configured, and the operating unit 16 which the operator OP grasps is provided on the front arm portion 13, and thus the degree of bending of the arm of the operator OP changes according to the expansion and contraction of the front arm portion 13. Specifically, when the front arm portion 13 is expanded, the distance between the operating unit 16 and the upper arm portion 12 is large, meaning that the arm of the operator OP is stretched out, while, when the front arm portion 13 is contracted, the distance between the operating unit 16 and the upper arm portion 12 is small, meaning that the arm of the operator OP is bent. Therefore, the operator OP can recognize the position of the hand portion 14 of the movement assistance device 1 without visually checking the position, but by the degree of bending of his or her own arm and the posture of his or her own hand, for example.

As described above, with a configuration according to an aspect of the present invention, the power assisted suit is supported by being hung from the hanging portion with the suspension member, instead of being supported from below by a base or the like, and thus even a power assisted suit for heavy loads that includes heavy motor and frame, etc., can be supported by a wearer fitted with the power assisted suit and is widely usable on various floor surfaces without the issue of falling.

Note that the present invention is not limited to the above embodiment and is applicable in various other implementations. For example, the configurations of the power assisted suit and the lower-limb fitting unit are not limited to the above embodiment, meaning that it is possible to use any power assisted suit configured to be fitted onto the upper body of the operator and be driven following the movement of the operator to power-assist the movement of the operator. Likewise, the arm units do not need to be a pair of left and right arm units and may be one that assists the movement of one of the arms of the operator.

Furthermore, the lower-limb fitting unit does not need to power-assist the stretching of each joint and may be any unit that can reduce the load on the lower limbs of the operator to assist the operator in a standing position.

Furthermore, the horizontal movement of the hanging portion 3 may be made through the movement of the operator OP fitted with the power assisted suit. For example, it is possible to use an operation handle that can be operated with a hand of the operator to input forward, backward, leftward, and rightward movements.

Although the movement assistance device according to one or more aspects is described thus far based on the embodiment, the present invention is not limited to this embodiment. Various modifications of the present embodiment as well as embodiments resulting from combinations of structural elements of the different embodiments that may be conceived by those skilled in the art may be included within the scope of the one or more aspects as long as these do not depart from the essence of the present invention.

### [Reference Signs List]

- 1, 100: movement assistance device
- 2, 101: power assisted suit
- 3, 102: hanging portion
- 3a: boom
- 3b: distal end
- 3c: crane control portion
- 3d: tension control portion
- 4, 103: suspension member
- 6, 104: fitting portion
- 7, 105: arm unit
- 8: saddle
- 9: shoulder rotary joint
- 10: shoulder actuator
- 11: shoulder portion
- 12: upper arm portion
- 13: front arm portion
- 14: hand portion
- 15: upper arm joint
- 16: operating unit
- 17: actuator
- 18: claw opening and closing actuator
- 20: leg link portion
- 21: thigh link portion
- 22: calf link portion
- 23: foot rest portion
- 24: actuator unit
- 25: force sensor
- 26: control portion
- 106: connecting end
- OP: operator

## Claims

1. A movement assistance device, comprising:
a hanging portion configured to be movable horizontally;
a power assisted suit that assists a movement of a wearer by moving along the movement of the wearer, and includes a fitting portion that is fitted onto an upper part of a torso of the wearer, an arm unit that is provided on the fitting portion to extend along at least part of an arm of the wearer and configured to generate supplementary power for assisting a movement of the arm of the wearer in a direction following the movement of the arm, and a movement control portion that moves the hanging portion horizontally; and
a suspension member that is suspended from the hanging portion, connects the hanging portion to the fitting portion of the power assisted suit, and hangs the power assisted suit from above under predetermined tension.

2. The movement assistance device according to claim 1,
wherein the hanging portion includes a crane that includes a boom configured to be rotatable with a variable tilt angle, and the suspension member is a wire configured to be feedable from the crane.

3. The movement assistance device according to claim 1 or 2, further comprising
a tension control portion that controls tension of the suspension member that hangs the power assisted suit fitted onto the wearer, so as to cause the tension of the suspension member to be a predetermined value.

4. The movement assistance device according to claim 3,
wherein the tension control portion controls the tension of the suspension member based on output from the load measurement portion, and includes a load measurement portion that is fitted onto a leg of the wearer and measures a load applied by the wearer, and (ii).

5. The movement assistance device according to claim 3 or 4,
wherein the tension control portion determines the predetermined value of the tension based on a value of the supplementary power of the arm unit.

6. The movement assistance device according to any one of claims 3 to 5, further comprising
a lower-limb fitting unit including: a lower fitting portion that is fixedly fitted onto a trunk of the wearer; a leg link portion including a knee joint part configured to be bendable and stretchable; and a foot rest portion that is connected to the leg link portion via an ankle joint part and on which a foot of the user is fixedly placed,
wherein the load measurement portion is provided on a top surface of the foot rest portion of the lower-limb fitting unit.

7. The movement assistance device according to claim 1,
wherein the hanging portion includes a pulley suspended above the wearer, and the suspension member includes a wire that is wound around the pulley and has a heavy bob at one end at which the wire is not connected to the power assisted suit.
